Europäisches Patentamt

European Patent Office

Office européen des brevets

(11) Veröffentlichungsnummer: **0 160 918**
A2

(12) # EUROPÄISCHE PATENTANMELDUNG

(21) Anmeldenummer: 85105236.5

(51) Int. Cl.⁴: **B 60 Q 1/04**

(22) Anmeldetag: 30.04.85

(30) Priorität: 09.05.84 DE 3417041

(43) Veröffentlichungstag der Anmeldung:
13.11.85 Patentblatt 85/46

(84) Benannte Vertragsstaaten:
DE FR GB

(71) Anmelder: AUDI AG
Postfach 2 20
D-8070 Ingolstadt(DE)

(72) Erfinder: Vollrath, Johannes
Eduard-Hirsch-Strasse 51
D-7107 Neckarsulm(DE)

(74) Vertreter: Speidel, Eberhardt
Postfach 1320 Waldpromenade 26
D-8035 Gauting(DE)

(54) Einrichtung zur Befestigung einer Beleuchtungseinheit an einer Kraftfahrzeugkarosserie.

(57) Zur Befestigung einer Beleuchtungseinheit an einer Kraftfahrzeugkarosserie ist das Gehäuse (9) oder der Tragrahmen der Beleuchtungseinheit und die Karosserie (15) einerseits mit hinterschnittenen Hohlraumen (13) und andererseits mit in diese Hohlraume hineinragenden Verankerungsvorsprungen (16) versehen. Die Hohlräume (13) sind mit einem aushärtbaren elastischen Kunststoff (20) gefüllt, in dem die Verankerungsvorsprunge (16) eingebettet sind. Dadurch wird eine formschlussige, aber elastische, auch verhältnismäßig große Toleranzen ausgleichende Verbindung swischen der Beleuchtungseinheit und der Karosserie hergestellt

FIG. 3

EP 0 160 918 A2

Einrichtung zur Befestigung einer Beleuchtungseinheit
an einer Kraftfahrzeugkarosserie

Die Erfindung bezieht sich auf eine Einrichtung zur Befestigung einer Beleuchtungseinheit an einer Kraftfahrzeugkarosserie, wobei das Gehäuse der Beleuchtungseinheit direkt oder über einen Tragrahmen mit der Karosserie verbunden ist. Der Begriff "Karosserie" umfaßt auch Karosserieteile, wie Front- oder Heckpartien, an denen die Beleuchtungseinheit anzubringen ist und die an der übrigen Karosserie befestigt werden. Diese Karosserieteile können aus Blech bestehen, werden aber in zunehmendem Maße auch aus Kunststoff gefertigt (z.B. "Soft-Nose"), um leichte Unfälle ohne bleibende Verformung überstehen zu können.

Die Befestigung von Scheinwerfern an der Karosserie erfolgt bisher ausschließlich durch Schrauben mit Beilagscheiben und Muttern, sowie zusätzlich durch Federbügel, um eine in bestimmten Grenzen elastische Aufnahme des Scheinwerfers zu erreichen und insbesondere Fahrbahnstöße zu dämpfen, welche die Lebensdauer der Glühlampen erheblich verkürzen. Diese Art der Montage ist verhältnismäßig aufwendig und kann vor allem kaum vollautomatisch durchgeführt werden. Die Schrauben, Scheiben und Muttern sind Losteile, von denen bei der Montage ein nicht unerheblicher Teil verloren geht. Überdies besteht stets die Gefahr, daß bei der Vielzahl von verschiedenartigen Schrauben, die bei der Montage des Fahrzeuges verwendet werden, versehentlich falsche Schrauben benutzt werden, die für die sichere Befestigung der Scheinwerfer nicht geeignet sind.

Zur Vermeidung dieser Nachteile ist es bekannt (DE-OS 30 30 427), eine Beleuchtungseinrichtung mittels einer Rastverbindung am Frontteil des Fahrzeuges zu befestigen. Dieser Gedanke läßt sich in der Praxis kaum durchführen,

- 2 -                    0160918

da im Karosseriebau Toleranzen in der Größenordnung von
mehreren mm auftreten, die durch eine derartige Rastverbindung nicht überbrückt werden können. Auch die im Betrieb
auftretenden Verwindungen der Karosserie lassen eine derartige Rastverbindung problematisch erscheinen. Schließlich
ist eine elastische Lagerung über eine derartige Verbindung
nur schwer vorstellbar.

Der Erfindung liegt die Aufgabe zugrunde, eine Einrichtung
zur Befestigung einer Beleuchtungseinrichtung an einer
Kraftfahrzeugkarosserie zu schaffen, mit der die Befestigung
voll automatisiert werden kann, die keine Losteile, wie
Schrauben, Muttern und Beilagscheiben erfordert, kostengünstig ist, einen großen Toleranzausgleich in jeder
Richtung ermöglicht und bewirkt, daß Fahrbahnstöße nur
gedämpft auf die Beleuchtungseinrichtung übertragen werden,
ohne "tanzendes" Licht zu erzeugen.

Diese Aufgabe wird erfindungsgemäß durch die im Kennzeichen
des Anspruchs 1 angegebenen Merkmale gelöst.

Bei der Montage der Beleuchtungseinheit wird ihr Gehäuse
bzw. der Tragrahmen in der Karosserie durch übliche Mittel
ausgerichtet und lagefixiert, wobei die am einen Teil angebrachten Verankerungsvorsprünge in die hinterschnittenen
Hohlräume am anderen Teil hineinragen. Dann wird vollautomatisch mittels üblicher Kunststoff-Spritzpistolen
Kunststoff in die Hohlräume eingespritzt, der nach dem
Aushärten eine gewisse Elastizität aufweist, welche abstimmbar ist. Besonders vorteilhaft hat sich ein Schaumkunststoff erwiesen, wie er beispielsweise auch beim Einschäumen von Fensterrahmen verwendet wird. Da zwischen
der Wand des Hohlraumes und dem in diesen hineinragenden
Verankerungsvorsprung in jeder Richtung ein verhältnismäßig
großer Abstand sein kann, der von dem Kunststoff ausgefüllt wird, lassen sich Fertigungstoleranzen, die bei
Karosserien bis zu 10 mm betragen können, ohne weiteres
ausgleichen. Im Reparaturfall kann diese Verbindung auf
einfache Weise durch Schmelzen des Kunststoffes mittels
einer Thermosonde gelöst werden.

Die Hohlraume sind vorzugsweise von topfartigen Vertiefungen
gebildet, an deren Innenumfangswand radial nach innen vorstehende Vorsprünge, vorzugsweise in Form einer radial nach
innen sich erstreckenden Rippe, angeformt sind. Alternativ
können die Hohlräume auch einen trapezförmigen Querschnitt
haben.

Die Verankerungsvorsprünge sind vorzugsweise topfförmig
und ihr Boden weist eine zentrale Öffnung auf. Diese Ausführung gestattet auf besonders einfache Weise die Herstellung dieser Vorsprünge, wenn es sich bei dem betreffenden Teil um ein Blechteil handelt, da dann die
Vorsprünge einfach aus dem Blechteil herausgedrückt werden.
Selbstverständlich können diese Vorsprünge auch als eigene
Blechpreßteile hergestellt werden, die dann an den betreffenden Stellen an der Karosserie angeschweißt werden.

Ausführungsbeispiele der Erfindung werden im folgenden
unter Bezugnahme auf die Zeichnungen beschrieben.

Fig. 1 zeigt in perspektivischer und teilweise ausein-
        andergezogener Darstellung den Vorbau einer Kraftfahrzeug-Karosserie mit zwei Beleuchtungseinheiten,
        von denen die rechte als Tragrahmen-Doppelscheinwerfer und die linke als Gehäusescheinwerfer ausgebildet ist,

Fig. 2 zeigt den Tragrahmen-Doppelscheinwerfer von

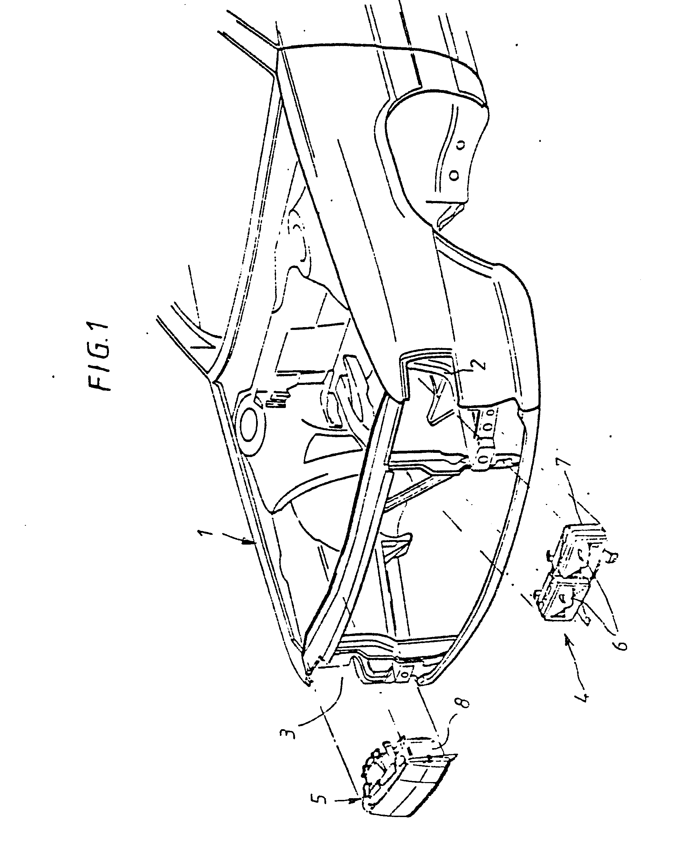

        Fig. 1 und den benachbarten Teil des Karosserie-
        Vorbaues in perspektivischer Darstellung und in
        größerem Maßstab,

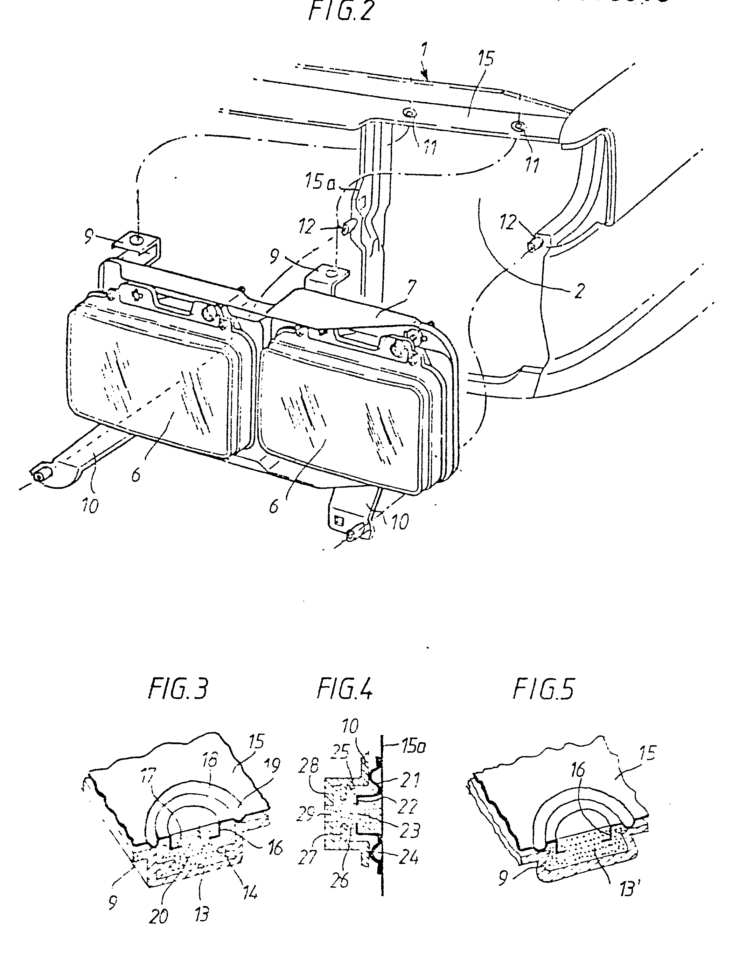

Fig. 3 zeigt eine Befestigungsstelle zwischen dem Scheinwerfergehäuse oder Tragrahmen und der Karosserie
gemäß einem ersten Ausführungsbeispiel im Schnitt
und in perspektivischer Darstellung, und

Fig. 4 und 5 zeigen Abwandlungen der in Fig. 2 dargestellten
Befestigungsstelle.

In Fig. 1 ist der Vorbau einer Kraftfahrzeug-Karosserie 1
dargestellt, der Ausschnitte 2 und 3 zur Aufnahme je einer
Beleuchtungseinheit aufweist. In Fig. 1 ist die rechte Beleuchtungseinheit 4 als Tragrahmen-Doppelscheinwerfer und
die linke Beleuchtungseinheit 5 als Gehäusescheinwerfer
ausgebildet. Die Beleuchtungseinheit 4 weist zwei Einbauscheinwerfer 6 auf, die einstellbar in einem Tragrahmen 7
angeordnet ist, der in dem Ausschnitt 2 an der Karosserie 1
befestigt wird. Bei der Beleuchtungseinheit 5 ist der
Reflektor zusammen mit der Glühbirne einstellbar in einem
Gehäuse 8 angeordnet, das im Ausschnitt 3 an der Karosserie
1 befestigt wird.

Die Anordnung und der Einbau des Tragrahmen-Doppelscheinwerfers 4 in dem Karosserieausschnitt 2 ist in Fig. 2 in
größerem Maßstab dargestellt. Der Tragrahmen 7 weist obere
Fortsätze 9 und untere Fortsätze 10 auf, an denen der
Rahmen 7 im Ausschnitt 2 an der Karosserie 1 befestigt wird.
Die Befestigungspunkte an der Karosserie für die Fortsätze 9
sind mit 11 und die Befestigungspunkte für die Fortsätze 10
sind mit 12 bezeichnet.

Im Gegensatz zu der üblichen Befestigung der Beleuchtungseinheiten an der Karosserie mittels Schrauben und Muttern
erfolgt beim Anmeldungsgegenstand diese Verbindung mit
Hilfe eines elastischen, aushärtbaren Kunststoffes, wie
Polyurethan-Schaumstoff. Beispielsweise Ausbildungen dieser
Verbindungen sind in den Figuren 3 bis 5 dargestellt.

Die Befestigung der Fortsätze 9 an den Stellen 11 der
Karosserie 1 kann beispielsweise in der in Fig. 3 gezeigten
Weise erfolgen. Wie ersichtlich, ist der Fortsatz 9 mit
einem im Querschnitt kreisförmigen Hohlraum 13 versehen,
an dessen Innenumfangswand eine radial nach innen sich erstreckende Rippe 14 angeformt ist, sodaß ein hinterschnittener Hohlraum gebildet wird. An den Stellen 11 in Fig. 2 ist
aus dem Karosserieblech 15 ein topfartiger Vorsprung 16
herausgedrückt, dessen Boden 17 eine zentrale Öffnung 18
aufweist und der in den Hohlraum 13 eingreift. Der Vorsprung 16 ist von einer Ringwulst 19 umgeben, an der die
Oberseite des Fortsatzes 9 anliegt. Der Hohlraum 13 und der
Innenraum des Vorsprunges 16 sind mit einem aushärtenden
elastischen Kunststoff 20, beispielsweise Polyurethan-Schaum,
ausgefüllt, sodaß der Vorsprung 16 in dem Kunststoff eingebettet ist. Durch die Hinterschneidungen, die einerseits
von der Rippe 14 und andererseits von dem Rand des Bodens
17 gebildet werden, entsteht über den Kunststoff 20 eine
formschlüssige, jedoch etwas elastische Verbindung zwischen
dem Fortsatz 9 und dem Karosserieblech 15.

Die Befestigung der Fortsätze 10 des Tragrahmens 7 an den
Stellen 12 der Karosserie kann in der aus Fig. 4 ersichtlichen Weise erfolgen. Das Befestigungsprinzip ist das
gleiche wie bei Fig. 3, nur ist hier an dem Karosserieblech 15a ein topfartiger Körper 21 angeschweißt, dessen
Boden 22 eine zentrale Öffnung 23 aufweist und der mit
einer Ringwulst 24 versehen ist, an der der Fortsatz 10
mit seiner Rückseite anliegt. Der Fortsatz 10 ist ähnlich
wie beim Ausführungsbeispiel gemäß Fig. 3 mit einem Hohlraum 25 versehen, in den eine Rippe 27 hineinragt und
dessen Boden 28 eine Öffnung 29 aufweist. Der Hohlraum 25
und auch der Innenraum des topfartigen Körpers 21 ist mit
aushärtendem elastischen Kunststoff 26 gefüllt, welcher
aufgrund der Hinterschneidungen, gebildet durch die Rippe
27 im Hohlraum 25 und den Rand des Bodens 22 des topfartigen Körpers 21, eine formschlüssige, jedoch elastische Verbindung zwischen dem Fortsatz 10 und dem Karosserieblech 15a herstellt.

Bei der Montage der Beleuchtungseinheit 4 wird diese mittels einer Montagehilfslehre im Ausschnitt 2 der Karosserie 1 lagemäßig fixiert, wobei die topfartigen Vorsprünge 16 in den Hohlräumen 13 und die topfartigen Körper 21 in den Hohlräumen 25 zu liegen kommen. Dann wird mittels einer Spritzpistole Kunststoff einerseits durch die Vorsprünge 16 und die Öffnungen 18 in die Hohlräume 13 und andererseits durch die Öffnungen 29 in die Hohlräume 25 und durch die Öffnungen 23 in die Innenräume der topfartigen Körper 21 eingespritzt, bis diese vollständig mit Kunststoff gefüllt sind, wie dies aus Figuren 3 und 4 ersichtlich ist. Nach dem Aushärten des Kunststoffes ist der Tragrahmen 7 mit den Scheinwerfern 6 fest, aber elastisch mit der Karosserie 1 verbunden. Dann kann die Montagehilfslehre abgenommen werden.

Das Ausführungsbeispiel gemäß Fig. 5 entspricht weitgehend dem Ausführungsbeispiel gemäß Fig. 3, mit dem Unterschied, daß der Hohlraum 13' einen trapezförmigen Querschnitt hat und dadurch hinterschnitten ist, sodaß die Rippe 14 von Fig. 3 entfallen kann.

In den dargestellten Ausführungsbeispielen ist der Tragrahmen 7 aus Kunststoff und das Karosserieteil aus Blech. Es können jedoch auch beide Teile aus dem gleichen Material oder das Karosserieteil aus Kunststoff und der Tragrahmen aus Blech bestehen.

Die Befestigung der Beleuchtungseinheit 5, also eines Gehäusescheinwerfers, in dem Ausschnitt 3 des Karosserievorbaues kann in der gleichen Weise wie vorstehend in Zusammenhang mit der Befestigung der Beleuchtungseinheit 4 beschrieben, durchgeführt werden. Dabei ist das Scheinwerfergehäuse 8 mit hinterschnittenen Hohlräumen 13 bzw. 25 versehen, in welche die topfartigen Vorsprünge 16 bzw. 21 eingreifen. Welche der Ausführungen von Fig. 3 und 4 verwendet wird, hängt von der Zugänglichkeit für die Spritzpistolen ab.

Selbstverständlich sind viele Abwandlungen der dargestellten Ausführungsbeispiele denkbar, ohne den Rahmen der Erfindung zu verlassen. Wesentlich für die Erfindung ist lediglich, daß die Querschnitte der Hohlräume und die in diese hineinragenden Vorsprünge derart ausgebildet sind, daß durch den eingespritzten und erhärteten Kunststoff eine formschlüssige Verbindung zwischen den Teilen hergestellt wird.

0160918

271/84     P 34 17 041.3     angemeldet am 09. Mai 1984

AUDI NSU AUTO UNION AKTIENGESELLSCHAFT, 7107 Neckarsulm

---

Einrichtung zur Befestigung einer Beleuchtungseinheit an einer Kraftfahrzeugkarosserie

---

Patentansprüche

1. Einrichtung zur Befestigung einer Beleuchtungseinheit
   an einer Kraftfahrzeugkarosserie, wobei das Gehäuse der
   Beleuchtungseinheit direkt oder über einen Tragrahmen
   mit der Karosserie verbunden ist,
   dadurch gekennzeichnet, daß
   das Gehäuse (8) oder der Tragrahmen (7) der Beleuchtungseinheit (5 bzw. 4) und die Karosserie (1) einerseits
   hinterschnittene Hohlräume (13, 25) und andererseits
   in die Hohlräume (13, 25) hineinragende Verankerungsvorsprünge (16, 21) aufweist und die Hohlräume (13, 25)
   mit einem aushärtbaren elastischen Kunststoff (20 bzw. 26)
   gefüllt sind, in den die Verankerungsvorsprünge (16, 21)
   eingebettet sind.

2. Einrichtung nach Anspruch 1, dadurch gekennzeichnet, daß an der Innenumfangswand der Hohlräume (13, 25) mindestens ein radial nach innen sich erstreckender Vorsprung (Rippe 14 bzw. 27) angeformt ist.

3. Einrichtung nach Anspruch 1, dadurch gekennzeichnet, daß die Hohlräume (13') einen trapezförmigen Querschnitt haben.

4. Einrichtung nach Anspruch 1, dadurch gekennzeichnet, daß die Verankerungsvorsprünge (16, 21) topfförmig sind und ihr Boden (17, 22) eine zentrale Öffnung (18, 23) aufweist.

5. Einrichtung nach Anspruch 1 und 4, wobei ein Teil, nämlich das Gehäuse bzw. der Tragrahmen der Beleuchtungseinheit oder die Karosserie, aus Kunststoff und das andere Teil aus Blech besteht, dadurch gekennzeichnet, daß die Hohlräume (13, 25) im Kunststoffteil angeordnet und die topfförmigen Vorsprünge (16) aus dem Blechteil (15) herausgedrückt sind.

FIG.1

0160918

## FIG.2

## FIG.3          FIG.4          FIG.5